Europäisches Patentamt

European Patent Office

Office européen des brevets

(11) Numéro de publication: **0 267 112 B1**

# FASCICULE DE BREVET EUROPEEN

(45) Date de publication de fascicule du brevet:
**22.05.91**

(51) Int. Cl.⁵: **B21C 33/00**, B23Q 7/04

(21) Numéro de dépôt: **87402466.4**

(22) Date de dépôt: **02.11.87**

(54) **Installation de filage de métal.**

(30) Priorité: **04.11.86 FR 8615349**

(43) Date de publication de la demande:
**11.05.88 Bulletin 88/19**

(45) Mention de la délivrance du brevet:
**22.05.91 Bulletin 91/21**

(84) Etats contractants désignés:
**AT BE DE FR GB IT NL**

(56) Documents cités:
**EP-A- 0 047 938**    **DE-A- 1 481 826**
**DE-A- 3 120 464**    **DE-C- 728 357**
**FR-A- 660 941**    **FR-A- 1 261 038**

**PATENT ABSTRACTS OF JAPAN, vol. 4, no. 2 (C-69), 9 janvier 1980, page 48 C 69; & JP-A-54 136 560 (UBE KOSAN K.K.) 23-10-1979**

(73) Titulaire: **CLECIM**
**107 boulevard de la Mission Marchand**
**F-92400 Courbevoie(FR)**

(72) Inventeur: **Bessey, Guy**
**54 rue des Hortensias**
**F-95430 Auvers sur Oise(FR)**
Inventeur: **Aubonnet, Jean-Claude**
**47 rue Sainte Claire**
**F-42600 Montbrison(FR)**

(74) Mandataire: **Le Brusque, Maurice et al**
**Cabinet Harlé et Phélip 21, rue de la Roche-foucauld**
**F-75009 Paris(FR)**

EP 0 267 112 B1

Rank Xerox (UK) Business Services

## Description

La présente invention a pour objet une installation de filage de métal à partir de billettes découpées à la demande.

Une installation de filage de métal comprend essentiellement une presse de filage alimentée par des morceaux de métal à filer appelés "billettes" et associée par conséquent d'un côté à des dispositifs de préparation des billettes et de l'autre à des dispositifs d'évacuation des barres filées.

D'une façon générale, la presse de filage comprend un sommier relié par des colonnes à une traverse fixe et une traverse mobile déplaçable suivant une direction de filage sous l'action d'un vérin principal prenant appui sur la traverse fixe. Entre la traverse mobile et le sommier est placé un conteneur limitant un logement tubulaire pour la billette à filer et susceptible d'être obturé à ses deux extrémités par deux pièces de fermeture, respectivement un fond plein appelé aussi grain de poussée, prenant appui sur la traverse mobile et une filière montée sur un support appelée aussi "grain porte-filière" et prenant appui sur le sommier. La filière définit l'axe de filage. Le filage est provoqué par enfilement à l'intérieur du logement d'une tige allongée de longueur supérieure à celle du logement, appelée "fouloir" et portant à son extrémité l'une ou l'autre des pièces de fermeture selon le mode de filage choisi.

On distingue en effet deux types essentiels de filage:

- le filage direct dans lequel le conteneur est fixe et s'appuie sur le sommier portant la filière, le fouloir s'appuyant sur la traverse mobile et étant muni à son extrémité du grain de poussée qui ferme le conteneur et s'emboîte dans celui-ci en pénétrant progressivement dans le logement pour se rapprocher de la filière en provoquant le filage du métal de la billette.
- Le filage inverse dans lequel le conteneur prend appui sur la traverse mobile qui porte le fond du conteneur et s'enfile sur un fouloir fixe prenant appui sur le sommier et portant à son extrémité tournée vers le conteneur le grain porte-filière, le conteneur étant déplacé par la traverse mobile vers le sommier en s'enfilant sur le fouloir, ce dernier étant muni d'un orifice axial d'évacuation de la barre ainsi formée.

L'invention qui sera décrite plus loin peut s'appliquer à l'un ou l'autre des deux types de presse à filer.

Il est possible d'alimenter la presse en billettes pré-découpées de longueur constante mais la quantité de métal filé dépend évidemment du volume de la billette et peut par conséquent ne pas correspondre aux besoins. C'est pourquoi, dans certains cas, on préfère découper les billettes à la demande de façon que chaque billette ait un volume correspondant sensiblement à la longueur de barre que l'on désire filer compte tenu du culot qui reste toujours en fin de filage entre le grain de poussée et le grain portefilière.

Dans ce cas, le métal à filer se présente sous forme de barres ou "lopins" que l'on coupe, à la demande, à une extrémité pour former une billette de longueur voulue. Comme la billette doit en outre être réchauffée à la température de filage, il est intéressant de faire passer les barres de métal dans un four de réchauffage à l'extrémité duquel est placée une cisaille permettant de couper des billettes de longueur variable adaptée à la longueur de produit à filer. La cisaille comprend elle-même des moyens de maintien de la billette après la coupe dans une position d'attente et des moyens de déplacement de la billette coupée de la position d'attente jusqu'à une position de chargement dans la presse centrée sur l'axe de filage.

Normalement, le four de réchauffage des barres et la cisaille qui lui est associée sont placés à côté de la presse et la billette est transférée parallèlement à elle-même de la position d'attente à la position de chargement suivant une direction de déplace ment transversale à l'axe de filage.

Le moyen de maintien de la billette en position d'attente est souvent constitué par une pelle en forme de goulotte associée à la cisaille et qui soutient l'extrémité de la barre pendant la coupe puis, par un mouvement de basculement par exemple, vient se placer dans la position d'attente.

Divers moyens sont employés pour assurer le transfert de la billette de la position d'attente à la position de chargement. Par exemple, la pelle placée à la sortie de la cisaille peut déverser la billette coupée sur un convoyeur transversal qui amène la billette jusqu'à un godet placé à l'extrémité d'un bras susceptible de basculer ensuite pour mettre la billette dans l'axe de filage. Le transfert de la position d'attente au dispositif de chargement peut également être fait au moyen d'une pince montée sur un support déplaçable transversalement. Etant donné que le four et la cisaille sont placés obligatoirement à une certaine distance de la presse, il a donc semblé naturel jusqu'à présent d'utiliser deux dispositifs de transfert séparés, d'une part un dispositif constitué, comme on l'a vu, par un convoyeur ou une simple goulotte qui amène la billette de la position d'attente après coupe jusqu'à une position de reprise plus rapprochée de la presse et d'autre part un bras de chargement muni d'un godet qui, par pivotement ou translation, amène la billette de la position de reprise à la position de chargement (DE-A-3.120.464).

Cette manipulation de la billette par au moins deux organes de transfert en passant par une position ce reprise augmente les temps de transfert mais présente surtout des inconvénients lorsque la billette est en plusieurs morceaux. En effet, comme on l'a indiqué, on préfère souvent couper les billettes à la demande à partir de barres se trouvant dans un four de réchauffage. La longueur de ces barres ne correspond normalement pas à un multiple entier de la longueur de la billette et par conséquent, lorsqu'on arrive à la fin de la barre, le morceau restant peut être soit inférieur soit supérieur à la longueur de la billette. Si la longueur restante est trop petite, il faut donc compléter ce morceau par un morceau complémentaire pris sur la barre suivante et si la longueur est trop grande, il reste un morceau de petite taille qui, pour ne pas être perdu, doit être associé à un morceau complémentaire pris sur la barre suivante.

Le transfert d'une billette en plusieurs morceaux de la position d'attente à la position de chargement présente des difficultés en particulier lorsque les morceaux sont de petite taille car ils peuvent se mettre en travers dans les différents organes de transfert.

D'autre part, la billette doit être introduite axialement dans le conteneur et doit donc être placée, en position de chargement, dans un espace libre ménagé entre une extrémité du logement et la pièce de fermeture correspondante. A cet effet, on écarte axialement le fond du conteneur de ce dernier ou bien le conteneur du grain porte-filière, la billette étant amenée par la pelle de chargement dans l'espace ainsi ménagé puis introduite à l'intérieur du logement par coulissement axial.

La presse doit donc avoir une longueur supplémentaire permettant les déplacements du conteneur nécessaires pour ménager l'espace libre de chargement. Cependant, compte tenu de l'évolution des techniques de filage, on est amené à réduire autant que possible le nombre et l'amplitude des mouvements des différents organes de la presse de façon à réduire le temps global du cycle de filage et en outre, vu les dimensions atteintes actuellement par les presses de filage, toute diminution de la longueur de la presse se traduit par une économie importante. C'est pourquoi, pour réduire la longueur de la presse, on a proposé parfois d'enfiler le conteneur sur le fouloir de façon à ménager l'espace libre de chargement entre le fouloir et la filière dans le cas du filage en direct ou bien entre le fouloir et le fond du conteneur dans le cas du filage en inverse.

Pour introduire la billette dans le conteneur, cette dernière peut être maintenue seulement à une extrémité par la pelle de chargement, l'autre extrémité, en porte-à-faux est alors introduire dans le logement du conteneur puis, la billette étant maintenue par ce dernier, la pelle de chargement peut être retirée et la billette introduite dans le logement par un vérin de chargement ou le fouloir, ou bien par déplacement du conteneur.

Il est bien, clair qu'un tel mode de chargement ne peut pas être utilisé lorsque la billette est constituée de deux morceaux séparés.

Certes, on connaît des appareils de manutention et, par exemple, le document EP-A-0047.938 montre un robot de manipulation d'outillage qui comprend deux pinces montées coulissantes sur un support de façon à régler leur espacement. Un tel dispositif, prévu pour être associé à des machines à commande numérique, est compliqué et onéreux, et il serait inadapté à la manipulation de billettes de métal à filer qui sont des pièces lourdes dont le diamètre et la longueur peuvent être de plusieurs dizaines de centimètres. En outre, dans le cas de la manipulation de billettes en deux morceaux séparés, chacun de ceux-ci devrait être pris en charge par l'une des pinces et l'utilisation d'un tel dispositif serait difficile et ne présenterait aucun avantage par rapport aux dispositifs habituellement utilisés.

Dans un autre mode de chargement, après avoir placé la billette dans l'espace libre entre le fond de fermeture du conteneur et le grain porte-filière, on commande le rapprochement de ces deux pièces entre lesquelles la billette se trouve pincée; la pelle de chargement peut alors être retirée et le conteneur déplacé axialement de façon à s'enfiler sur la billette ainsi maintenue. Jusqu'à présent, il n'était pas possible d'utiliser un tel mode de chargement avec une billette en deux morceaux qui, avec les dispositifs utilisés, ne pouvaient pas être maintenus dans le prolongement l'un de l'autre pour s'enfiler facilement dans le logement du conteneur.

L'invention a pour objet une installation perfectionnée permettant de résoudre ces différents problèmes et en particulier de permettre un chargement facile d'une billette en plusieurs morceaux.

Cette installation de filage de métal à partir ce billettes découpées à la demande, comportant: une presse de filage comprenant un sommier, une traverse fixe et une traverse mobile déplaçable suivant une direction de filage sous l'action d'au moins un vérin principal, un conteneur limitant un logement tubulaire susceptible d'être obturé à ses deux extrémités par deux pièces de fermeture, respectivement un fond plein prenant appui sur la traverse mobile et une filière montée sur un support prenant appui sur le sommier et définissant un axe de filage, l'une desdites pièces de fermeture étant placée à l'extrémité d'un fouloir susceptible de s'enfiler à l'intérieur du logement pour provoquer le filage, un four de réchauffage du métal à filer sous forme de barres, une cisaille de coupe, à la demande, de billettes de longueur variable, associée à des moyens de maintien de la billette coupée en position d'attente suivant une direction parallèle à l'axe de filage et décalée latéralement, et un organe unique de transfert de la billette transversalement à l'axe de filage, de la position d'attente à une position de chargement centrée sur l'axe de filage

est caractérisée par le fait que l'organe de transfert de la billette comprend une pince de largeur variable susceptible de maintenir la billette serrée sur toute sa longueur entre au moins deux mâchoires téléscopiques comprenant chacune une partie fixe et une partie mobile montée coulissable sur la partie fixe suivant une direction parallèle à l'axe de la billette, ladite pince étant associée a des moyens de réglage des longueurs déployées des parties mobiles de façon à couvrir une largeur sensiblement égale à la longueur de la billette.

Selon une caractéristique particulièrement avantageuse de l'invention, l'espace libre de chargement laissé par coulissement axial du conteneur entre une extrémité du logement et la pièce de fermeture correspondante à une longueur réglable limitée, à chaque chargement, à la longueur de la billette correspondante.

Dans un mode de réalisation préférentiel, la billette étant maintenue, après cisaillage, dans une pelle ou une goulotte associée à un vérin de chargement longitudinal, la pince est placée, en position d'attente, sur le côté de la goulotte opposé au vérin de chargement de telle sorte que la face d'appui de la mâchoire inférieure se trouve dans le prolongement de la goulotte, la billette passant de la goulotte à la pince par coulissement axial sous l'action du vérin de chargement. En outre, la pince de chargement est disposée de telle sorte que la partie fixe de chaque mâchoire soit écartée de l'extrémité de la goulotte d'une distance sensiblement égale à la longueur maximale de déploiement de la partie mobile, cette dernière pouvant être réglée, pour chaque mâchoire, par un vérin de poussée placé dans l'axe de la partie mobile du côté opposé à la goulotte de telle sorte que les parties mobiles puissent être déployées entièrement jusqu'à la goulotte par les vérins de poussée puis maintenues dans cette position dans une première partie du déplacement de la billette par maintien de la pression dans les vérins de poussée jusqu'à ce que la billette ait quitté entièrement la goulotte, la pression dans les vérins de poussée étant alors relâchée dans une seconde partie du déplacement pendant laquelle le vérin de chargement repousse la billette et les parties téléscopiques jusqu'à ce que la billette rencontre une butée placée du côté opposé à la goulotte et dont la position correspond au chargement de la billette sur la totalité des parties fixes des mâchoires.

Grâce à ces dispositions, on réalise le serrage sur toute la longueur de la billette même lorsque celle-ci est constituée de deux morceaux et, du fait que l'on utilise un organe unique de transfert, la billette reste serrée entre les deux mâchoires de la pince depuis la position d'attente jusqu'à la position de chargement, le serrage entre les deux mâchoires de la pince étant remplacé, dans cette position, par le pinçage entre les deux organes de fermeture du conteneur de telle sorte que, à aucun moment, les deux morceaux de la billette ne peuvent se déplacer l'un par rapport à l'autre si bien que le conteneur peut s'enfiler sans difficulté sur les deux morceaux ainsi maintenus dans le prolongement l'un de l'autre.

Selon une autre caractéristique avantageuse, l'organe de transfert de la billette peut s'arrêter dans une position intermédiaire placée entre la position d'attente et la position de chargement et pour laquelle la billette maintenue serrée dans la pince se trouve placée en face d'un organe de graissage d'au moins l'une de ses faces.

En outre, dans un mode de réalisation particulièrement intéressant l'organe unique de transfert des billettes de la position d'attente à la position de chargement comprend , en plus de la pince de serrage, une enceinte de maintien en réserve constituée d'un logement cylindrique d'axe parallèle à l'axe de filage et placée sur l'organe de transfert , en arrière de la pince de serrage dans le sens de transfert.

De préférence, l'axe de l'enceinte de réserve est écarté de celui de la pince d'une distance égale à la distance qui sépare la position d'attente de la position de graissage de telle sorte que, lorsque la billette maintenue par la pince de serrage se trouve en position de graissage, l'enceinte de maintien en réserve se trouve dans l'axe de la position d'attente.

Mais l'invention sera mieux comprise par la description suivante d'un mode de réalisation particulier, donné à titre d'exemple et représenté sur les dessins annexés.

La figure 1 représente schématiquement, en vue de dessus, l'ensemble de l'installation selon l'invention;

La figure 2 est une vue de côté selon la ligne II-II de la figure 1.

La figure 3 et la figure 4 sont des vues de détail, respectivement de côté et de dessus, de la pince de serrage.

La figure 5 est une vue de détail des moyens de réglage associés à la pince de serrage.

La figure 6 est une vue de dessus de l'organe de transfert en position de graissage et de mise en réserve d'une fausse coupe.

La figure 7 est une vue de dessus de l'organe de transfert en position de chargement.

La figure 8 représente schématiquement les différentes étapes du chargement d'une billette sur la pince de serrage.

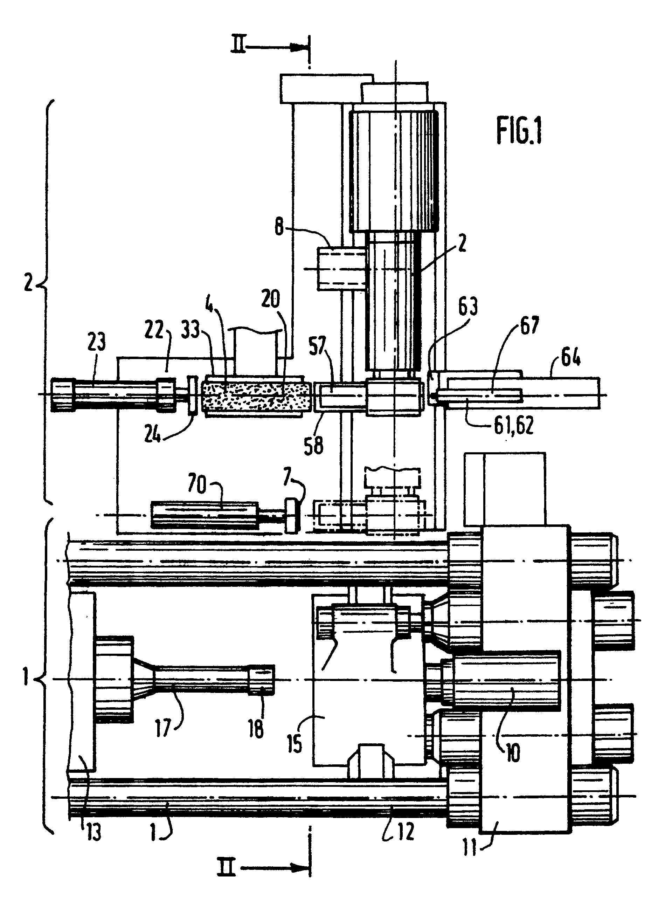

Sur la figure 1, on a représenté l'ensemble d'une installation de filage selon l'invention qui comprend schématiquement une presse de filage 1 et un organe de transfert 2, le four de réchauffage des barres et la cisaille n'étant pas représentés sur cette figure.

La presse de filage représentée sur l'ensemble des figures à titre d'exemple est du type direct mais les dispositions décrites peuvent s'appliquer à une presse à filage inverse.

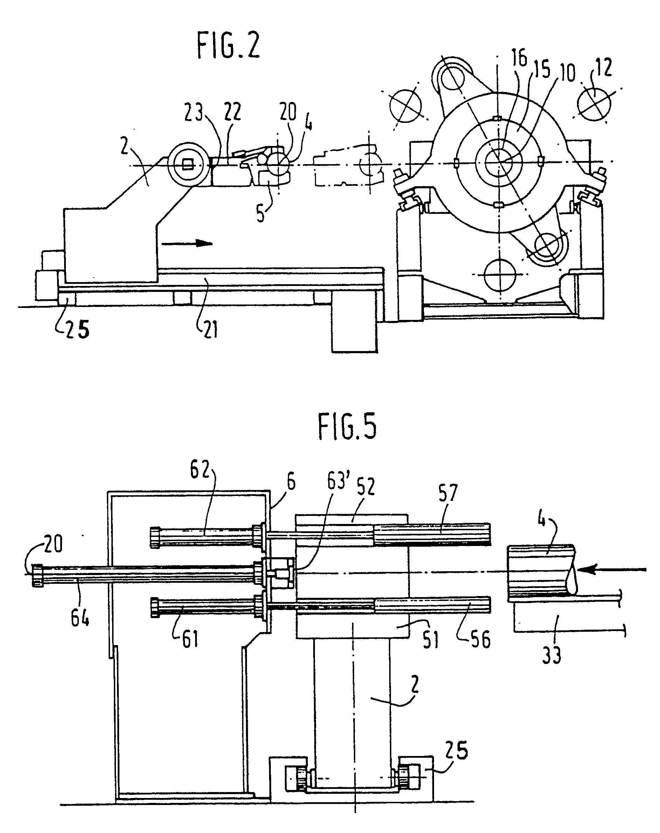

La presse de filage 1 représentée en vue de dessus sur la figure 1 et en vue de côté sur la figure 2, comprend donc un sommier 11 relié par des colonnes 12 à une traverse fixe non représentée sur laquelle s'appuie un vérin principal de filage qui détermine le déplacement le long d'un axe de filage 10 d'une traverse mobile 13.

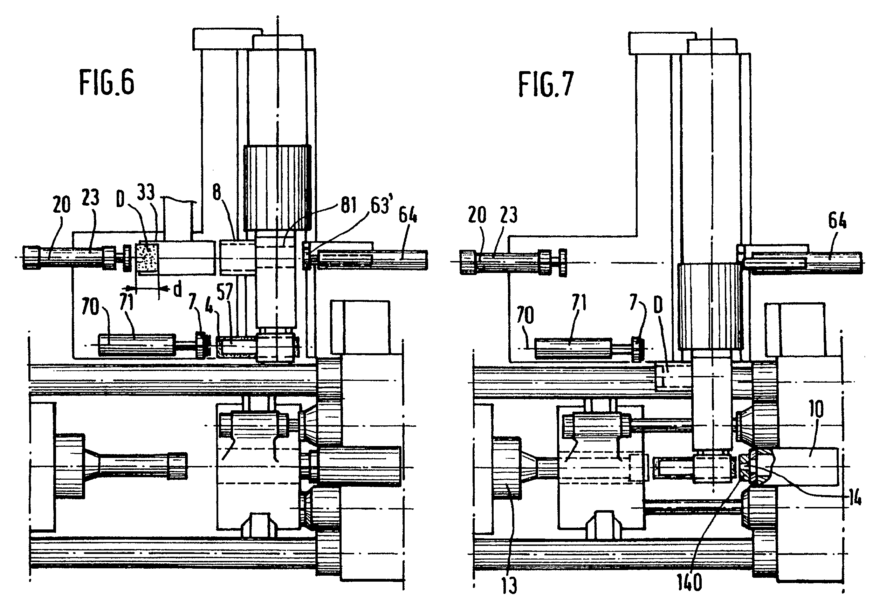

Une filière 14 centrée sur l'axe de filage 10 et représentée en détail sur la figure 7 prend appui sur le sommier 11 par l'intermédiaire d'un grain porte-filière 140.

Entre la traverse mobile 13 et le sommier 11 est placé un conteneur 15 qui est monté coulissant axialement entre les colonnes 12, comme on le voit sur la figure 2. Le conteneur 15 limite un logement 16 de forme cylindrique ouvert à ses deux extrémités sur les deux faces du conteneur et centré sur l'axe de filage 10. Du côté du sommier 11, le logement 16 peut s'emboîter sur le grain porte-filière 140.

D'autre part, la traverse mobile 13 porte un fouloir 17 constitué d'une tige montée en porte-à-faux et portant à son extrémité tournée vers le conteneur 15 une pièce 18 qui peut s'enfiler à l'intérieur du logement 16 du conteneur 15 en fermant ce dernier et sur la face opposée à celle de la filière 14. La pièce de fermeture 18 qui, dans les presses à filage inverse, est constituée par un fond plein, est appelée aussi grain de poussée. En effet, dans les presses à filage direct du type représenté sur les figures, lorsqu'une billette a été placée à l'intérieur du logement 16 du conteneur 15, on rapproche la traverse mobile 13 du sommier 11 au moyen de vérins de manoeuvre non représentés de telle sorte que le grain de poussée 18 s'enfile à l'intérieur du logement 16 qui est ainsi fermé à ses deux extrémités par les deux pièces de fermeture constituées respectivement par le grain porte-filière 140 et le grain de poussée 18 puis l'on actionne le vérin principal qui détermine l'enfoncement du fouloir 17 à l'intérieur du logement 16 avec filage du métal de la billette par l'orifice de la filière 14, le profilé ainsi formé étant évacué le long de l'axe 10 de filage par un conduit ménagé dans le sommier fixe 11.

Toutes ces dispositions bien connues n'ont été représentées que schématiquement, à titre d'exemple, l'invention pouvant s'appliquer à des presses de tous types, à filage direct ou inverse.

Comme on l'a indiqué, la presse de filage est associée à un four de réchauffage des barres muni lui-même à sa sortie, d'une cisaille.

De façon classique, la cisaille comprend une lame de coupe et une pièce de support associée à une butée dont la distance par rapport au plan de coupe peut être réglée de façon à déterminer la longueur de billette cisaillée. Après la coupe, la billette coupée est placée sur un dispositif tel qu'une pelle qui la maintient dans une position d'attente. Généralement, la pelle de maintien constitue elle-même la pièce de support de la billette pendant la coupe et elle est montée à l'extrémité d'un bras articulé qui, en pivotant, fait passer la pelle d'une position de coupe placée dans l'axe de la cisaille à une position d'attente à partir de laquelle la billette coupée peut être prise par d'autres organes pour être transférée en position de chargement. Tous ces appareils peuvent être de différents types connus et non donc pas été représentés sur les figures sur lesquelles, on a simplement indiqué schématiquement la pelle de sortie du four qui vient se placer dans une position d'attente pour laquelle la billette 4 est centrée sur un axe 40 parallèle à l'axe de filage 10.

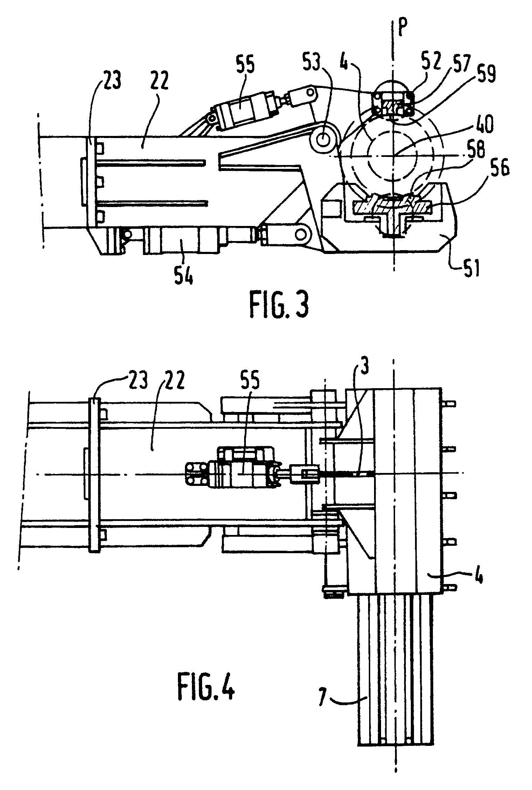

L'organe de transfert de la billette représenté sur les figures 1 et 2 comprend un chariot de support 2 qui est monté coulissant sur des rails 21 perpendiculairement à l'axe de filage 10. Sur le chariot 2 est fixé un bras de support 22, par exemple par l'intermédiaire d'une plaque de fixation 25 représentée sur les figures 3 et 4. A l'extrémité du bras 22 est montée une pince de serrage 5. Comme on le voit sur les figures 3 et 4, la pince 5 comprend une mâchoire inférieure 51 et une mâchoire supérieure 52 articulées chacune autour d'un axe de pivotement 53 qui peut être le même pour les deux mâchoires. Le pivotement des deux mâchoires est commandé par des vérins 54 et 55 dont un élément prend appui sur le bras 22 et l'autre sur la mâchoire correspondante en un point décalé de l'axe de pivotement 53.

Les deux mâchoires sont réalisées de façon télescopique et comprennent donc chacune une partie fixe, respectivement 51, 52, sur laquelle une partie mobile, respectivement 56, 57, est montée coulissante suivant une direction parallèle à l'axe 40 de la billette.

De préférence, la partie fixe 51 et la partie mobile 56 de la mâchoire inférieure présentent chacune une face d'appui constituée d'au moins deux parties profilées 58 en forme de règle disposées symétriquement par rapport à un plan longitudinal vertical P (figure 3) et la partie fixe 52 et la partie mobile 57 de la mâchoire supérieure présentent une face d'appui constituée d'au moins une partie profilée en forme de règle 59 centrée le long du plan P.

De la sorte, la billette 4, quel que soit son diamètre, est parfaitement maintenue le long d'au moins trois génératrices et la pression de serrage exercée par les vérins 54 et 55 s'exerce sur toute la longueur de la billette grâce au montage télescopique des deux mâchoires. Il en résulte que la billette 4 est parfaitement maintenue dans la pince de serrage même si elle est constituée de plusieurs morceaux de longueur relativement faible.

Bien entendu, les dimensions des mâchoires notamment les positions relatives de l'axe de pivotement et des parties profilées d'appui sont déterminées de telle sorte que, quel que soit le diamètre de la billette, celle-ci ait toujours son axe 40 placé dans le plan de symétrie P des deux mâchoires.

Comme on l'a représenté sur la figure 2, le chariot 2 de transfert, en se déplaçant perpendiculairement à l'axe de filage 10 peut prendre plusieurs positions, respectivement une position d'attente A, une position de graissage B et une position C de chargement dans le conteneur.

Dans la position d'attente A (figure 1), la pince de serrage portée par le chariot 2 est placée de telle sorte que le plan de symétrie P des deux mâchoires passe par l'axe 20 de la pelle de maintien 33 lorsque celle-ci se trouve en position d'attente après la coupe, les deux parties d'appui profilées 58 de la mâchoire inférieure 51 se trouvant dans le prolongement de la face d'appui de la pelle de maintien 33. Sur le bâti 25 supportant le chariot de support 2 est monté en vérin de poussée à double effet 23 centré sensiblement sur l'axe 20 et donc la tige porte à son extrémité une plaque de poussée 24 qui s'appuie sur la billette 4 pour faire glisser celle-ci de la pelle de maintien 33 sur la mâchoire inférieure 51 de la pince 5.

Cependant, la pince 5 est associée d'autre part à un dispositif 6 de réglage de la longueur déployée des parties mobiles des deux mâchoires télescopiques. Le dispositif de réglage 6, monté également sur le bâti 25 dans l'axe 20 et du côté opposé à la pelle de maintien 33 par rapport à la pince 5 comprend en particulier deux vérins 61, 62 représentés notamment sur la figure 5 susceptibles d'exercer une poussée parallèlement à l'axe 20 en s'appuyant respectivement sur les parties mobiles 56 et 57 des deux mâchoires de la pince 5.

En outre, le dispositif de réglage 6 comprend une butée 63 dont la position peut éventuellement être réglée et un vérin 64 dont le rôle sera exposé plus loin.

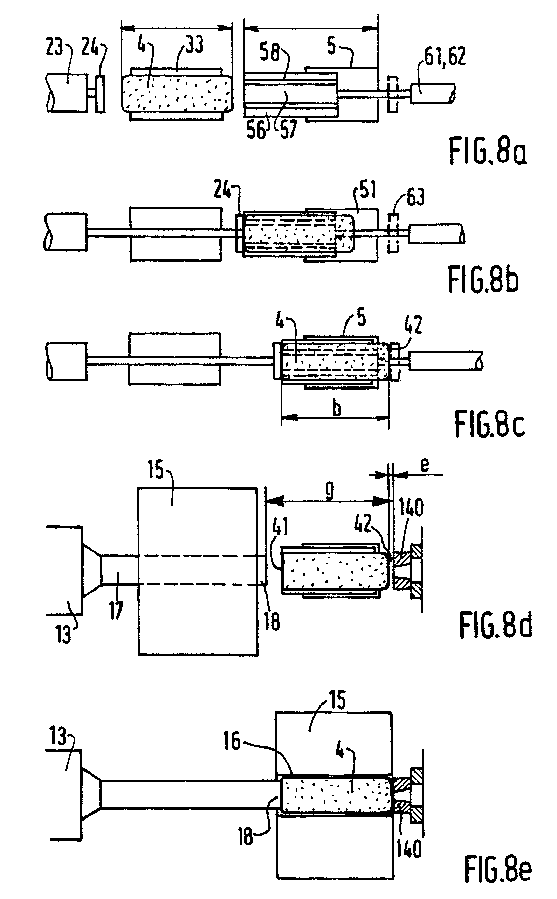

Le transfert de la billette 4 depuis la pelle 33 de maintien en position d'attente jusqu'à la pince 5 se fait en plusieurs étapes représentées schématiquement sur la figure 8.

Dans un premier temps représenté sur la figure 8a, le chariot 2 ayant placé la pince 5 en position d'attente, les vérins 61, 62 repoussent en fin de course les deux parties mobiles télescopiques 56, 57 qui, en étant complètement déployées, parviennent à une faible distance de la pelle de maintien 33.

L'ouverture des deux mâchoires 51, 52 est réglée par les vérins 54, 55 de telle sorte que, d'une part, les parties d'appui 58 de la mâchoire inférieure se trouvent dans le prolongement de la face d'appui de la pelle de maintien 33 et que d'aure part la partie d'appui 59 de la mâchoire supérieure 52 ne soit écartée de la face supérieure de la billette que par un léger jeu. La billette 4 peut alors être repoussée par le vérin 23, en glissant sur les parties d'appui 58. Pendant la première partie de ce glissement, les vérins 61 et 62 sont maintenus en pression de façon à retenir les parties mobiles 56 et 57 sur lesquelles vient buter la plaque de poussée 24 placée à l'extrémité de la tige du vérin 23. La billette 4 est alors complètement chargée sur la mâchoire inférieure 51, 56 de la pince 5, dans la position de la figure 8b.

La pression dans les vérins 61 et 62 est alors relâchée et l'on continue de repousser la billette au moyen du vérin 23, les deux parties mobiles 56, 57 étant entraînées en même temps. Ce glissement se poursuit jusqu'à ce que la face antérieure 42 de la billette 4 vienne prendre appui sur la butée fixe 63 qui est placée de façon à ne pas interférer avec les vérins 61, 62 et qui peut avantageusement, comme on le voit sur la figure 5, être placée à l'extrémité de la tige d'un vérin 64 placé entre les vérins de réglage 61 et 62 et dont le rôle sera exposé plus loin.

Le mouvement de la billette et des parties mobiles 56 et 57 s'arrête donc dans la position représentée sur la figure 8c et pour laquelle la largeur de la pince de serrage 5 correspond sensiblement à la longueur b de la billette 4 au jeu près nécessaire pour que la butée fixe 63 n'interfère pas avec la pince de serrage 5 et le bras 22.

Les deux mâchoires 51 et 52 sont alors serrées par les vérins 54 et 55 et à partir de ce moment, la billette est parfaitement maintenue, comme on l'a dit, le long de trois génératrices déterminées par les parties profilées 58 et 59 ménagées aussi bien sur les parties fixes que sur les parties mobiles des deux mâchoires.

Comme on utilise un organe unique de transfert de la billette de la position d'attente à la position de chargement, la billette reste ainsi serrée sur toute sa longueur jusqu'à son transfert dans la position de chargement représentée sur la figure 8d. La butée 63 est positionnée de façon à laisser entre la face antérieure 42 de la billette et la face d'appui du grain porte-filière 140 un léger jeu simplement nécessaire pour permettre le mouvement de la billette.

Selon la disposition connue, pour laisser libre un espace de chargement entre le grain de poussée 18 et le grain porte-filière 140, le conteneur 15 est enfilé sur le fouloir 17. Cependant, selon l'un des avantages essentiels de l'invention, étant donné que, grâce aux dispositions décrites précédemment, la pince de serrage 5 a une largeur limitée à la longueur d de la billette 4, il est possible de reculer la traverse mobile 13 par rapport à la traverse fixe 11 de la distance juste nécessaire pour laisser entre les faces en regard du grain de poussée 18 et du grain porte-filière 140 une distance g seulement un peu supérieure à la longueur b de la billette de telle sorte qu'il existe entre chacune des deux faces 41 et 42 de la billette 4 et la pièce de fermeture correspondante le jeu e simplement nécessaire pour permettre les mouvements de la billette. Ces jeux ont été amplifiés sur la figure 8d. En commandant un léger déplacement de la traverse mobile 13, on peut donc serrer la billette 4 entre le grain de poussée 18 et le grain porte-filière 140. La pince 5 peut alors être ouverte puis retirée et l'on commande enfin le coulissement du conteneur 15 qui s'enfile sur la billette jusqu'à venir en appui sur la traverse fixe 11 comme représenté sur la figure 8e.

On voit donc que, depuis la position d'attente jusqu'à la position de chargement à l'intérieur du logement, la billette est restée toujours parfaitement serrée sur toute sa longueur, ce qui permet de réaliser un transfert et une introduction de la billette dans le logement 16 dans des conditions parfaites même si la billette est en plusieurs morceaux. D'autre part, on peut limiter le déplacement g de la traverse mobile à la longueur juste nécessaire ce qui permet d'une part de réaliser des presses particulièrement compactes et d'autre part de limiter les déplacements de la traverse mobile à la longueur de la billette en réduisant ainsi le cycle de filage étant donné que les déplacements de la traverse mobile et du conteneur ne peuvent pas être extrêmement rapides. On sait que, compte tenu de la productivité des presses de filage un gain de temps même très court sur l'ensemble du cycle peut augmenter considérablement la rentabilité de la presse.

En outre, le fait que la billette, même en deux morceaux, soit maintenue sur toute sa longueur pendant tout le transfert présente l'avantage supplémentaire de faciliter le graissage de la face postérieure de la billette.

On sait en effet qu'à la fin du filage il subsiste un culot de métal entre le grain de poussée et le grain porte-filière et une chemise solidaire du culot et qui s'est formée le long des parois du logement dans le jeu existant nécessairement entre le grain de poussée et le logement. Le culot adhère aux deux pièces de fermeture entre lesquelles il est écrasé et, depuis longtemps, pour faciliter l'évacuation du culot et de la chemise, on utilise la technique dite du grain "attelé" qui permet, en fixant le grain de poussée sur le fouloir 17 de le décoller du culot, ce qui facilite la récupération du grain . Pour cela, il est nécessaire de graisser la face 41 de la billette en contact avec le grain de poussée de façon à permettre le décollement de ce dernier.

Cette opération, qui est assez délicate dans les installations connues, en particulier lorsque la billette est en plusieurs morceaux, est facilitée par les dispositions que l'on vient de décrire.

En effet, au cours de son déplacement de la position d'attente A à la position de chargement C (figure 2) , le chariot de transfert 2 peut s'arrêter dans une position intermédiaire B pour laquelle l'axe 40 de la billette coïncide avec l'axe 70 d'un vérin 71 dont la tige est munie à son extrémité d'un tampon 7 imbibé de graisse . Comme la billette reste parfaitement maintenue sur toute sa longueur par les deux mâchoires télescopiques de la pince de serrage 5, il est possible, dans cette position, d'appliquer le tampon 7 contre la face postérieure 41 de la billette sans craindre de déplacer celle-ci, comme on l'a représenté sur la figure 6.

Comme on l'a indiqué, l'installation selon l'invention est particulièrement adaptée à la manipulation de billettes en deux morceaux, ce qui se produit notamment lorsque l'on cisaille à chaud des lopins passant l'un derrière l'autre dans un four tubulaire et que la billette à cisailler est constituée par l'extrémité postérieure du lopin en cours de coupe et l'extrémité antérieure du lopin suivant . Cependant, même en utilisant la pince télescopique selon l'invention, il faut éviter d'avoir à manipuler des " petits bouts" de longueur inférieure à une longueur minimale et qui est de l'ordre de la moitié du diamètre . Si, après la coupe d'un nombre entier de billettes, la longueur restante du lopin est de l'ordre de la moitié de la longueur de la billette, les deux morceaux ont des longueurs semblables et toutes deux supérieures à la longueur critique de manipulation. Mais le morceau restant peut aussi différer assez peu, par excès ou par défaut , de longueur de la billette et la coupe, sans précaution, d'une longueur normale ferait alors apparaître un "petit bout" soit à l'extrémité postérieure du lopin en cours de coupe , soit à l'extrémité antérieure du lopin suivant. Pour éviter un tel inconvénient, une installation moderne comporte généralement, un centre de contrôle automatique qui, par différents procédés connus, peut gérer la coupe de chaque lopin de façon à éviter l'apparition de "petits bouts".

Dans un procédé connu, par exemple, la pelle de sortie de la cisaille est munie de deux godets parallèles et, lorsque l'on prévoit l'apparition d'un "petit bout", on coupe la longueur restante du lopin en deux morceaux assez longs pour être manipulés. On repousse le premier morceau sur l'un des godets puis l'on décale la pelle de façon à y placer le second morceau et un morceau complémentaire pris sur le lopin suivant pour obtenir une longueur de billette normale. Cette billette en deux morceaux est transférée dans la presse et l'on ramène dans l'axe de la cisaille le premier reste mis en réserve pour le compléter à la longueur voulue par un second morceau complémentaire pris sur le lopin suivant.

L'installation selon l'invention est particulièrement adaptée à la mise en oeuvre d'un tel procédé non seulement parce qu'elle permet la manipulation d'une billette en deux morceaux mais également parce que , selon une caractéristique supplémentaire , le chariot 2 de transfert peut être adapté à cet effet .

Comme on le voit, en effet , sur les figures 6 et 7 , le chariot de transfert 2 est muni d'une enceinte tubulaire 8 disposée en arrière de la pince de serrage 5 dans la direction de déplacement du chariot, c'est-à-dire perpendiculairement à l'axe de filage . De préférence, l'axe de l'enceinte 8 est écarté de l'axe de la pince télescopique 5 d'une distance égale à l'écartement entre la position d'attente A et la position intermédiaire de graissage B de telle sorte que l'enceinte 8 se trouve centrée sur l'axe 20 de la position d'attente A lorsque le chariot est avancé en position de graissage de la billette maintenue sur la pince.

L'enceinte 8 limite un logement cylindrique dont la section transversale est un peu supérieure à celle de la billette et dont la longueur correspond à la longueur maximale des restes de lopin c'est-à-dire la moitié de la distance correspondant à la longueur de la billette augmentée de la longueur minimale de manipulation.

En outre, un vérin fixe 64 est placé sur le bâti 25 et centré sur l'axe 20 de la position d'attente , du côté opposé au vérin de chargement 23 par rapport au chariot 2. La tige du vérin 64 porte à son extrémité une plaque de poussée 63' susceptible de passer dans un orifice 81 ménagé à l'intérieur du bras 22 et pouvant en outre constituer, en fin de course du vérin 64, la butée d'arrêt de la billette.

Cette disposition permet de mettre en oeuvre le procédé connu décrit précédemment, la mise en réserve d'un morceau de billette ne s'effectuant pas dès la sortie de la cisaille, sur la pelle de maintien 33, mais dans l'enceinte de stockage 8 placée sur le chariot de transfert 2. La coupe du morceau mis en réserve peut alors être faite à l'avance et non pas seulement dans le dernier morceau du lopin en cours de coupe.

En effet, lorsque, par comparaison entre la longueur du lopin et la longueur b à donner à la billette, on prévoit l'apparition d'un "petit bout", on coupe à l'avance un morceau D dont la longueur est d'une part suffisante pour que ce morceau soit stable et d'autre part déterminée de telle sorte qu'à la fin de la coupe, il reste un morceau B1 qui puisse être associé à un morceau B2 du lopin suivant pour constituer une billette de longueur b, les deux morceaux B1 et B2 ayant des longueurs b1 et b2 suffisantes pour être stables.

Le chariot 2 étant arrêté dans la position intermédiaire représentée sur la figure 6 , le morceau D placé sur la pelle 33 est repoussé dans l'enceinte de stockage 8 et le cycle se poursuit .

On arrive ainsi à la fin du lopin et l'on place dans l'axe de filage la billette en deux morceaux B1 et B2.

Entretemps , par réglage de la butée de la cisaille, on a coupé un morceau complémentaire E susceptible de former avec le morceau D mis en réserve une billette de longueur normale, les longueurs d et e des deux morceaux D et E étant telles que $d + e = b$ .

Le chariot 2 étant ramené en arrière dans la position de la figure 1, on transfère ce morceau E de la pelle 33 à la pince 5 dont les parties mobiles ont été entièrement déployées . On avance alors le chariot 2 dans la position intermédiaire et au moyen du vérin 64, on ramène le morceau D de l'enceinte 8 sur la pelle 33 puis l'on recule à nouveau le chariot 2 et l'on fait passer , au moyen du vérin 23, le morceau D sur la pince 5 en repoussant jusqu'à la butée le morceau E . La pince 5 porte alors les deux morceaux E et D qui, grâce aux dispositions de l'invention, se comportent comme une billette unique .

On voit que, grâce à cette disposition, le morceau D peut être coupé à l'avance sans attendre la fin de la coupe de la billette , et , de ce fait , il est préférable que l'enceinte de stockage 8 soit limitée par une paroi isolante de façon que le morceau D conserve autant que possible sa température . En cas de besoin, l'enceinte 8 pourrait d'ailleurs être munie d'un moyen de chauffage .

Bien entendu, il est également possible , comme dans le procédé connu, d'attendre la fin de la coupe du lopin pour couper la partie restante en deux morceaux manipulables En effet, l'invention ne se limite pas aux détails du mode de réalisation qui vient d'être décrit à titre de simple exemple mais couvre également toutes les variantes restant dans le cadre de protection défini par les revendications.

En outre si les dispositions selon l'invention ont été décrites à titre de simple exemple , dans le cas d'une presse à filage direct, tous les avantages de l'invention se retrouveraient, en apportant les modifications de détail nécessaires, dans une presse à filage inverse.

## Revendications

1. Installation de filage de métal à partir de billettes découpées à la demande, comportant:
   - une presse de filage comprenant un sommier (11), une traverse fixe et une traverse mobile (13) déplaçable suivant une direction de filage sous l'action d'au moins un vérin principal, un conteneur (15) limitant un logement tubulaire (16) susceptible d'être obturé à ses deux extrémités par deux pièces de fermeture, respectivement un fond plein (18) prenant appui sur la traverse mobile et une filière (14) montée sur un support prenant appui sur le sommier et définissant un axe de filage (10), l'une (18) desdites pièces de fermeture étant placée à l'extrémité d'un foulloir (17) susceptible de s'enfiler à l'intérieur du logement (16) pour provoquer le filage,
   - un four de réchauffage du métal à filer sous forme de barres (44,45),
   - une cisaille de coupe, à la demande, de billettes (4) de longueur variable (b), associée à des moyens (33) de maintien de la billette coupée en position d'attente (A) suivant une direction parallèle à l'axe de filage et décalée latéralement, et
   - un organe unique (2) de transfert de la billette (4), transversalement à l'axe de filage (10), de la position d'attente (A) à une position de chargement (c) centrée sur l'axe de filage, caractérisée par le fait que l'organe (2) de transfert de la billette comprend une pince (5) de largeur variable susceptible de maintenir la billette serrée sur toute sa longueur entre au moins deux mâchoires téléscopiques comprenant chacune une partie fixe (51, 52) et une partie mobile (56, 57) montée coulissable sur la partie fixe (51,52) suivant une direction parallèle à l'axe de la billette, ladite pince (5) étant associée à des moyens (6) de réglage des longueurs déployées des parties mobiles de façon à couvrir une largeur sensiblement égale à la longueur de la billette.

2. Installation de filage selon la revendication 1, caractérisée par le fait que la pince (5) est montée à l'extrémité d'un bras (22) fixé sur un chariot (2) déplaçable, perpendiculairement à l'axe de filage (10), entre la position d'attente (A) et la position de chargement (C).

3. Installation de filage selon la revendication 1, caractérisée par le fait que, un espace libre de chargement étant laissé, par coulissement axial du conteneur (15), entre une extrémité du logement (16) et la pièce de fermeture correspondante, ledit espace de chargement a une longueur (g) réglable limitée, à chaque chargement, à la longueur (b) de la billette correspondante, aux jeux nécessaires près.

4. Installation de filage selon l'une des revendications précédentes, caractérisée en ce que la partie fixe (51) et la partie mobile (56) de la mâchoire inférieure présentent une face d'appui constituée d'au moins deux parties profilées (58) en forme de règle symétriques par rapport à un plan longitudinal vertical (P) et que la mâchoire supérieure (52) présente une face d'appui constituée d'au moins une partie profilée (59) en forme de règle centrée sur ledit plan longitudinal (P) de symétrie.

5. Installation selon la revendication 1, caractérisée par le fait que, les moyens de maintien de la billette après cisaillage étant constitués par une pelle (33) associée à un vérin de chargement longitudinal, la pince est placée, en position d'attente sur un côté de la pelle (33) et le vérin de chargement (23) du côté opposé, de telle sorte que la face d'appui (58) de la mâchoire inférieure (51) se trouve dans le prolongement de la pelle (33), la billette passant de la pelle (33) à la pince (5) par coulissement axial sous l'action du vérin de chargement (23).

6. Installation de filage selon la revendication 5,caractérisée en ce que la pince de chargement (5) en position de déploiement maximal des parties mobiles (56, 57) a une largeur sensiblement égale à la longueur du logement (16) du conteneur (15).

7. Installation de filage selon l'une des revendications 5 ou 6, caractérisée en ce que les moyens (6) de réglage de la longueur de déploiement des parties mobiles (56, 57) comprennent, pour chaque mâchoire (51, 52), un vérin de poussée (61, 62) placé dans l'axe de la partie mobile correspondante du côté opposé à la pelle (33), des moyens d'alimentation et de maintien de la pression dans les vérins de poussée (61,62) pour le déploiement des parties mobiles (56,57) jusqu'à la pelle (33) et le maintien dans cette position pendant une première partie du déplacement de la billette jusqu'à ce que celle-ci ait quitté entièrement la pelle (33) et des moyens de relâchement de la pression dans les vérins de poussée (61, 62) dans une seconde partie du déplacement de la billette avec les parties mobiles (56, 57) sous l'action du vérin de chargement (23) jusqu'à ce que la billette rencontre une butée (63) placée du côté opposé à la pelle (33) et dont la position correspond au chargement de la billette sur la totalité des parties fixes (51, 52) des mâchoires.

8. Installation de filage selon la revendication 1, caractérisée en ce qu'elle comprend des moyens de graissage d'au moins la face de la billette tournée vers le fouloir (17), placés dans une position intermédiaire (B) sur le trajet de la pince de chargement (5) entre la position d'attente (A) et la position de chargement (C).

9. Installation de filage selon l'une des revendications 1 et 8, caractérisée en ce que l'organe (2) de transfert des billettes est muni d'une enceinte (8) de maintien en réserve constituée d'un logement cylindrique d'axe parallèle l'axe de filage (10) et susceptible d'être centré dans l'axe (20) de la position d'attente (A) pour une position intermédiaire de l'organe de transfert (2).

10. Installation de filage selon la revendication 9, caractérisée en ce que l'axe de l'enceinte (8) de maintien en réserve est écarté de l'axe de la pince télescopique (5) d'une distance égale à l'écartement entre la position d'attente (A) et la position intermédiaire de graissage (B).

## Claims

1. Installation for metal extrusion using billets cut as required and comprising:
   - an extrusion press comprising a bolster (11), a fixed cross head and a mobile cross head (13) which can be displaced along the direction of extrusion under the action of at least one principal actuator, a container (15) defining a tubular housing (16) capable of being closed at its two ends by two sealing parts, respectively, a solid base (18) in contact with the mobile cross head and an extrusion die (14) mounted on a support in contact with the bolster and defining an axis of extrusion (10), one (18) of the said sealing parts being positioned at the end of a ram (17) capable of entering inside the housing (16) in order to initiate the extrusion stage.
   - a furnace for heating the metal to be extruded in the form of bars (44,45)
   - a shearing unit for cutting, as required, billets (4) of variable length (b), associated with a means (33) of holding the cut billet in a waiting position (A) along a direction parallel to the axis of extrusion and offset laterally, and
   - a single device (2) for transferring the billet (4), transversal to the axis of extrusion (10), from the waiting position (A) to a loading position (C) centred on the axis of extrusion    characterised in that the device (2) used to transfer the billet comprises a gripping device (5) of variable length capable of holding the billet firmly over its full length between at least two telescopic jaws, each comprising a fixed part (51, 52) and a mobile part (56, 57) mounted so that it can slide on the fixed part (51, 52) along a direction parallel to the axis of the billet, the said gripping device (5) being associated with a means (6) of adjusting the extended lengths of the mobile parts in order to cover a width which is substantially equal to the length of the billet.

2. Installation for metal extrusion in accordance with claim 1, characterised in that the gripping device (5) is mounted at the end of an arm (22) fixed onto a carriage (2) which can be displaced, perpendicular to the axis of extrusion (10), between the waiting position (A) and the loading position (C).

3. Installation for metal extrusion in accordance with claim 1, characterised in that, a free space being provided for loading purposes, by axially sliding the container (15), between one end of the housing (16) and the corresponding sealing part, the said loading space has an adjustable length (g) which is limited, for each loading, to the length (b) of the billet corresponding approximately to the necessary clearances.

4. Installation for metal extrusion in accordance with one of the preceding claims, characterised in that the fixed part (51) and the mobile part (56) of the lower jaw includes a supporting face comprising at least two profiled parts (58) in the form of bars which are symmetrical relative to a vertical and longitudinal plane (P) and that the upper jaw (52) includes a supporting face comprising at least one profile part (59) in the form of a bar centred on the said longitudinal plane (P) of symmetry.

5. Installation in accordance with claim 1, characterised in that the means of holding the billet following the shearing stage comprises a holder (33) associated with an actuator used for longitudinal loading, the gripping device being located in the waiting position on one side of the holder (33) and the loading actuator (23) on the opposite side, so that the supporting face (58) of the lower jaw (51) is in alignment with the extension forming part of the holder (33), the billet passing from the holder (33) to the gripping device (5) by means of an axial sliding movement under the action of the loading actuator (23).

6. Installation for metal extrusion in accordance with claim 5, characterised in that the gripping device used for loading (5), in the position of maximum extension of the mobile parts (56, 57), has a width substantially equal to the length of the housing (16) the container (15).

7. Installation for metal extrusion in accordance with one of claims 5 or 6, characterised in that the device (6) used for adjusting the length of extension of the mobile parts (56, 57) comprises, for each jaw (51, 52), thrusting actuator (61, 62) positioned in the axis of the corresponding mobile part on the side opposite to the holder (33), a means of supplying and maintaining the pressure in the thrusting actuators (61, 62) and used to extend the mobile parts (56,57) up to the holder (33) and maintaining it in that position during a first stage the displacement of the billet and until this has been completely discharged from the holder (33) and a means of releasing the pressure in the thrusting actuators (61, 62) during a second stage of the displacement procedure for the billet relative to the mobile parts (56,57), under the action of the loading actuator (23) and until the billet contacts a stop (63) located on the side opposite to the holder (33), position of which corresponding to the loading of the billet completely onto the fixed parts (51, 52) of the jaws.

8. Installation for metal extrusion in accordance with claim 1, characterised in that it comprises a means of lubricating at least the face of the billet turned towards the ram (17), this being placed in an intermediate position (B) relative to the path of the gripping device (5) used for loading, between the waiting position (A) and the loading position (C).

9. Installation for metal extrusion in accordance with one of claims 1 and 8, characterised in that the device (2) used to transfer the billets is provided with a storing chamber (8) constituted of a cylindrical housing, having an axis parallel to the axis of extrusion (10) and capable of being centred in the axis (20) of the waiting position (A) in an intermediate position of the transfer device (2).

10. Installation for metal extrusion in accordance with claim 9, characterised in that the axis of the storing chamber (8) is located a distance from the axis of the telescopic gripping device (5) equal to the distance between the waiting position (A) and the intermediate lubrication position (B).

## Ansprüche

1. Anlage zum Strangpressen von Metall aus nach Mass abschnittenen Pressbolzen, bestehend aus:
   - einer Strangpresse mit einem Pressholm (11). einer ortsfesten Traverse und einer beweglichen Traverse (13), die unter der Wirkung mindestens eines Hauptzylinders gemäss einer Strangpressrichtung verfahrbar ist, einem Aufnehmer (15), der ein rohrförmiges Gehäuse (16) begrenzt, das an seinen beiden Enden mittels zwei Verschlussteile verschliessbar ist, je einem sich auf der beweglichen Traverse abstützenden Massivboden (18) und einer Matrize (14), die auf einer auf dem Pressholm (11) aufliegenden Abstützung montiert ist, und eine Strangpressachse bestimmt (10), wobei das eine (18) dieser Verschlussteile am Ende eines innen in das Gehäuse einführbaren Stempels (17) zwecks Bewirkung des Stranpressvorgangs angeordnet ist,
   - einem Wärmeofen für das als Stangen (44, 45) ausgebildete zu strangpressende Metall,
   - einer Schere zum Abschneiden nach Mass von Pressbolzen (4) verschiedener Länge (b), welcher Haltemittel (33) für den abgeschnittenen Pressbolzen in einer Wartestellung (A) gemäss einer zur Strangpressachse parallelen und seitlich versetzten Richtung zugeordnet sind, und
   - einer einzigen Uebergabeeinrichtung (2) des Pressbolzens (4) quer zur Strangpressachse (10), von der Wartestellung (A) in eine auf die Strangpressachse zentrierte Ladestellung (C), dadurch gekennzeichnet, dass das Pressbolzen-Uebergabemittel (2) eine Zange (5) mit veränderlicher Breite aufweist, die geeignet ist, den Pressbolzen über dessen gesamten Länge zwischen mindestens zwei Teleskopbacken festzuhalten, mit jeweils einem feststehenden Teil (51, 52) und einem beweglichen Teil (56, 57), das auf dem feststehenden Teil (51, 52) gemäss einer zur Pressbolzenachse parallelen Richtung gleitbar montiert ist, wobei der Zange (5) Einstellmittel (6) für die ausgefahrenen Längen der beweglichen Teile zugeordnet sind, um eine im wesentlichen der Pressbolzenlänge entsprechenden Breite abzudecken.

2. Strangpressanlage nach Anspruch 1, dadurch gekennzeichnet, dass die Zange (5) am Ende eines Armes (22) montiert ist, der auf einem senkrecht zur Strangpressachse (10) zwischen der Wartestellung (A) und der Ladestellung (C) verfahrbaren Schlitten (2) befestigt ist.

3. Strangpressanlage nach Anspruch 1, wobei ein freier Laderaum durch Gleiten des Aufnehmers (15) in axialer Richtung zwischen dem einen Ende des Gehäuses (16) und dem entsprechenden Verschlussteil gebildet wird, dadurch gekennzeichnet, dass dieser Laderaum eine einstellbare Länge (g) aufweist, die unter Berücksichtigung der erforderlichen Spiele bei jeder Ladung auf die Länge (b) des entsprechenden Pressbolzens begrenzt ist.

4. Strangpressanlage nach einem der vorhergehenden Ansprüche, dadurch gekennzeichnet, dass das feststehende Teil (51) und das bewegliche Teil (56) der unteren Backe eine Auflagefläche aufweisen, die mindestens aus zwei als Lineal ausgebildeten zu einer senkrechten Längsebene (P) symmetrischen Profilteile (58) besteht, und dass die obere Backe (52) eine Auflagefläche aufweist, die aus mindestens einem als Lineal ausgebildeten auf diese symmetrische Längsebene (P) zentrierten Profilteil (59) besteht.

5. Strangpressanlage nach Anspruch 1, wobei die Pressbolzen-Haltemittel nach dem Scherenschnitt aus einer Schaufel (33) mit einem zugeordneten Längsladezylinder bestehen, dadurch gekennzeichnet, dass die Zange sich in einer Wartestellung auf der einen Seite der Schaufel (33) und der Ladezylinder (23) auf der entgegengesetzten Seite befindet, so dass die Auflagefläche (58) der unteren Backe (51) in der Verlängerung der Schaufel (33) ist, wobei der Pressbolzen unter der Wirkung des Ladezylinders (23) durch axiales Gleiten von der Schaufel (33) zur Zange (5) übergeben wird.

6. Strangpressanlage nach Anspruch 5, dadurch gekennzeichnet, dass die Ladezange (5) in der maximalen Spreizstellung der beweglichen Teile (56, 57) eine im wesentlichen der Länge des Gehäuses (16) des Aufnehmers (15) entsprechenden Breite aufweist.

7. Strangpressanlage nach einem der Ansprüche 5 oder 6, dadurch gekennzeichnet, dass die Einstellmittel (6) der Spreizlänge der beweglichen Teile (56, 57) für jede Backe (51, 52) ein Schubzylinder (61, 62) aufweisen, welcher auf der der Schaufel (33) entgegengesetzten Seite in der Achse des entsprechenden beweglichen Teils angeordnet ist, sowie Druckversorgungs- und Haltemittel in den Schubzylindern (61, 62) für das Spreizen der beweglichen Teile (56, 57) bis hin zur Schaufel (33) und das Halten in dieser Lage in einer ersten Bewegungsphase des Pressbolzens bis dieser die Schaufel (33) vollständig verlassen hat, und Druckabfallmittel in den Schubzylindern (61, 62) in einer zweiten Bewegungsphase des Pressbolzens mit den beweglichen Teilen (56, 57) unter der Wirkung des Ladezylinders (23) bis der Pressbolzen mit einem Anschlag (63) in Kontakt kommt, welcher auf der der Schaufel (33) entgegengesetzten Seite angeordnet ist, wobei dessen Lage dem Laden des Pressbolzens über die gesamten feststehenden Teile (51, 52) der Backen entspricht.

8. Strangpressanlage nach Anspruch 1, dadurch gekennzeichnet, dass sie Schmiermittel mindestens auf der zum Stempel (17) hin gerichteten Pressbolzenseite aufweist, die sich in einer Zwischenlage (B) auf dem Weg der Ladezange (5) zwischen der Wartestellung (A) und der Ladestellung (C) befinden.

9. Strangpressanlage nach einem der Ansprüche 1 und 8, dadurch gekennzeichnet, dass die Uebergabeeinrichtung (2) der Pressbolzen ein Gehäuse zur Reservehaltung umfasst, die aus einer zylindrischen Aufnahme besteht, deren Achse parallel zur Strangpressachse (10) verläuft und die in der Achse (20) der Wartestellung (A) für eine Zwischenstellung der Uebergabeeinrichtung (2) zentriert werden kann.

10. Strangpressanlage nach Anspruch 9, dadurch gekennzeichnet, dass die Achse des Gehäuses für die Reservehaltung zur Achse der Teleskopzange (5) in einem Abstand angeordnet ist, der dem Abstand zwischen der Wartestellung (A) und der Schmierungszwischenstellung (B) entspricht.

FIG.1

# FIG.2

# FIG.5

FIG. 3

FIG. 4

FIG.7

FIG.6

FIG.8a

FIG.8b

FIG.8c

FIG.8d

FIG.8e